## Europäisches Patentamt
## European Patent Office
## Office européen des brevets

(19)

(11) Numéro de publication: **0 196 998**
**A1**

(12) # DEMANDE DE BREVET EUROPEEN

(21) Numéro de dépôt: **86810089.2**

(22) Date de dépôt: **18.02.86**

(51) Int. Cl.⁴: **A 01 G 9/16**
**A 01 G 13/04, E 06 B 3/48**

(30) Priorité: 26.03.85 CH 1308/85

(43) Date de publication de la demande:
08.10.86 Bulletin 86/41

(84) Etats contractants désignés:
BE CH DE FR IT LI NL

(71) Demandeur: **Giroud, Louis**
**Vitrerie**
**CH-1634 La Roche(CH)**

(72) Inventeur: **Giroud, Louis**
**Vitrerie**
**CH-1634 La Roche(CH)**

(74) Mandataire: **Steiner, Martin et al,**
**c/o AMMANN INGENIEURS-CONSEILS EN PROPRIETE**
**INTELLECTUELLE SA BERNE Schwarztorstrasse 31**
**CH-3001 Bern(CH)**

(54) **Vitrerie flexible.**

(57) La vitrerie comprend des lames transparentes rigides (1), par exemple en verre, assemblées entre elles par des joints longitudinaux flexibles (4) dont l'épaisseur est au maximum égale à celle des lames transparentes (1), ces joints permettant une inclinaison des lames dans des plans différents. Une telle vitrerie peut être utilisée entre autres pour la confection de serres de construction simple, sans charnières, avec des fenêtres coulissantes permettant un accès aux plantes et une aération.

FIG.1

0196998

## VITRERIE FLEXIBLE

La présente invention concerne une vitrerie flexible composée de lames d'un matériau transparent supportées entre des cadres. Une telle vitrerie peut être utilisée par exemple pour des serres. Les serres existantes sont généralement formées de cadres vitrés. Elles présentent le désavantage d'avoir une mauvaise aération en raison du faible volume d'air et que pour atteindre les plantes, il faut enlever les cadres individuels qui sont alors généralement placés l'un sur l'autre. Ces serres connues peuvent aussi être réalisées avec des fenêtres en forme de volets basculant autour d'une chanière et tenus en position ouverte par une tringle. De tels volets compliquent toutefois la construction de la serre et ils n'offrent pas toute la sécurité désirée contre un rabattement imtempestif. En outre, les serres connues sont généralement de forme parallélipipédique non esthétique.

En conséquence, le but de la présente invention est de réaliser une vitrerie flexible pour la confection de serres ou enceintes similaires de construction simple et ne présentant pas les désavantages mentionnés ci-dessus. Pour atteindre ce but, la vitrerie flexible selon l'invention est telle que définie dans la revendication 1. Par le fait que les lames transparentes rigides sont assemblées entre elles par des joints flexibles, un ensemble formé d'un certain nombre de ces lames placées côte-à-côte selon leur longueur peut avoir une forme générale bombée ou en arc de cercle et servir par exemple de toîture ou partie supérieure esthétique pour une serre. Le profil de cette toîture est un polygone dont chaque lame forme un des côtés. Les joints flexibles entre les lames ont une très forte resistance à la traction garantissant la solidité de l'assemblage, ils sont étanches et résistant à la chaleur et au froid dans une large plage de températures. Ces joints, dont l'épaisseur est au maximum égale à celle des lames, jouent donc le rôle de charnières permettant à deux lames consécutives de se situer dans des plan d'inclinaison différentes, ce qui simplifie énormément la construction et rend celle-ci meilleur marché.

L'invention va être décrite ci-après à l'aide d'un exemple d'exécution avec référence au dessin dans lequel:

La figure 1 montre la vitrerie selon l'invention,

La figure 2 montre une serre utilisant des vitreries selon figure 1,

La figure 3 montre un profil utilisé dans la serre selon figure 2, et

La figure 4 montre une autre forme d'exécution d'une serre utilisant une vitrerie selon l'invention.

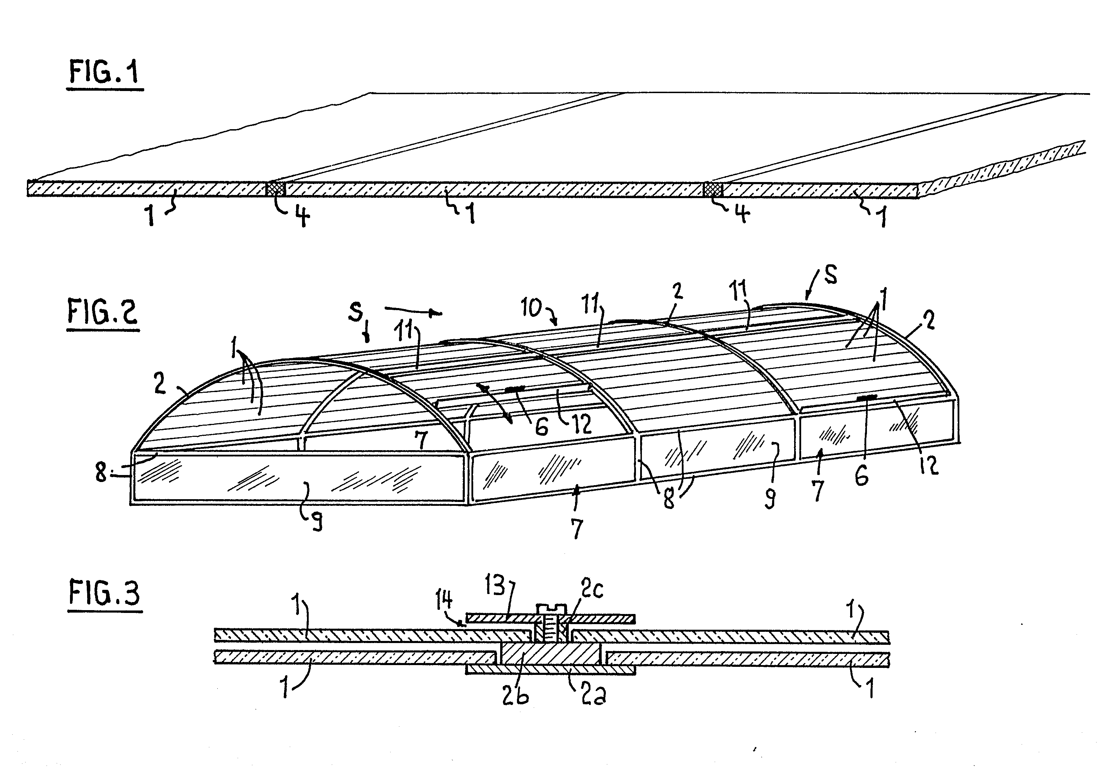

La figure 1 montre une vitrerie selon l'invention composée de lames 1 d'un matériau transparent rigide assemblées entre elles par la tranche à l'aide de joints flexibles 4. Les lames 1 doivent être rigides afin de ne pas être déformées par la chaleur ou l'humidité et elles sont de préférnece en verre, verre de sécurité ou verre à transparence variable selon l'éclairement. Cependant, tout autre matériau répondant aux exigences de transparence et de rigidité peut aussi être utilisé. La transparence aux rayons solaires joue un rôle lorsque la vitrerie est utilisée par exemple pour des serres chaudes ou de culture. Le joint 4 est un élément flexible, par exemple un mastic au silicone ou similaire jouant le rôle d'une charnière entre les lames et permettant à celles-ci de s'orienter dans des plan d'inclinaisons différentes. Les joints 4 offrent une forte résistance à la traction qui empêche le décollement des lames, ils sont étanches et résistants à l'humidité et à de grands écarts de température, par exemple entre $-40^{\circ}$ et $+85^{\circ}$C. Leur longueur, dans le plan des lames, est par exemple de 4mm et leur épaisseur est de préférence au maximum égale à celle des lames, de sorte qu'ils ne dépassent pas de celles-ci. Les lames ont des dimensions adaptées à leur utilisation. Des valeurs typiques mais non exclusives sont par exemple: longueur de 80 à 100cm, largeur d'au maximum 10cm et épaisseur de 3mm.

La figure 2 montre une serre utilisant la vitrerie selon figure 1. La serre se compose d'un certain nombre de sections S assemblées dans le prolongement l'une de l'autre par des cadres transversaux 2. Chaque section S se compose de deux parties verticales 7 formées d'un cadre 8 supportant par exemple une plaque de verre armé 9. Les parties verticales 7 sont reliées entre elles par une toîture 10 de forme bombée formée par exemple de trois vitreries selon figure 1. Dans la section centrale en figure 2, les vitreries sont fixes et assemblées entre les cadres transversaux 2, les cadres 8 et les longerons 11. A titre d'exemple, les sections d'extrémité en figure 2 peuvent être ouvertes. Dans ce but, elles comportent chacune deux vitreries formant fenêtres susceptibles d'être soulevées et rabattues par coulissement dans un profil approprié des cadres transversaux 2. Chaque vitrerie comporte un longeron 12 muni d'une poignée 6 fixé à la lame d'extrémité inférieure de la vitrerie, ce longeron 12 venant s'appuyer contre la liste supérieure du cadre 8 lorsque la fenêtre est entièrement fermée. Lorsque la fenêtre est entièrement ouverte, le longeron 12 vient buter contre le longeron 11 formant butée. Lors l'ouverture de la fenêtre de devant en figure 2, une partie des lames de celle-ci se déplacent au-dessus des lames de la fenêtre de derrière et, lors de l'ouverture de la fenêtre de derrière, une partie des lames de celle-ci coulissent sous les lames de la fenêtre de devant. Grace à cette disposition, les deux fenêtres peuvent être ouvertes en même temps, c'est-à-dire que chacune des sections d'extrémité en figure 2 peut être ouverte à la fois par l'avant et par l'arrière, ce qui permet une excellente aération des plantes de la serre. Dans le cas où la partie arrière de la serre s'appuye contre un mur, seule une fenêtre s'ouvrant d'avant en arrière sera prévue et une partie des lames de celle-ci coulissera par exemple au-dessus d'une partie des lames fixes de la vitrerie arrière de cette serre.

La figure 3 montre une coupe du cadre transversal 2. Celui-ci est formé d'un profilé qui peut être fabriqué par assemblage ou moulé. Il comprend une base 2a, une partie médiane 2b et une partie supérieure 2c. Les lames fixes d'une section S ou les lames mobiles d'une des fenêtres reposent sur la base 2a, leurs flancs latéraux venant en face de la partie médiane 2b. Les lames de la seconde fenêtre reposent sur la partie médiane 2b, leurs flancs latéraux venant en face de la partie supérieure 2c. Il est visible qu'un jeu est prévu aussi bien entre les flancs latéraux des lames 1 et les parties 2b, 2c qu'entre les lames inférieure et supérieure. Ces jeux permettent aux lames de coulisser facilement dans les cadres transversaux 2. Une latte 13 de fermeture est montée sur la partie supérieure 2c avec un jeu par rapport aux lames supérieures. Il se forme ainsi une rainure 14 dans laquelle peut coulisser la lame supérieure 1. La latte 13 donne en outre un aspect esthétique aux cadres transversaux 2. Ce qui précède montre que grace aux joints flexibles qu'elles comportent, et en raison des jeux prévus dans les cadres transversaux 2, les vitreries peuvent coulisser facilement dans ces cadres. Lors du montage, les lames des vitreries sont simplement engagées entre deux profilés transversaux consécutifs, ce qui rend l'assemblage particulièrement simple.

La description précédente d'une serre utilisant la vitrerie flexible selon l'invention montre que la construction est extrêmement simple et qu'elle ne comporte aucune charnière ni assemblage compliqué de composants. Le coulissement des fenêtres est facilité par les jeux mentionnés plus haut et par les joints flexibles 4 permettant aux lames de suivre facilement la courbure des cadres transversaux 2.

L'utilisation de la vitrerie selon l'invention est plus particulièrement prévue pour des surfaces polygonales et elle n'est pas limitée à la fabrication de serres pour plantes. Il est aussi possible d'utiliser la vitrerie par exemple pour des installation de chauffage solaire avec piscine, des jardins d'hiver et des aquariums. Un tel aquarium peut être réalisé en utilisant la vitrerie pour former le manteau d'un cylindre vertical monté de manière étanche sur une base appropriée. La vitrerie peut aussi être avantageusement utilisée pour réaliser une serre entre un balcon qui peut être en arc de cercle et le sol. Dans ce cas, la vitrerie est montée avec les lames 1 verticales et une fenêtre coulissant parallèlement au bord arrondi du balcon peut être prévue.

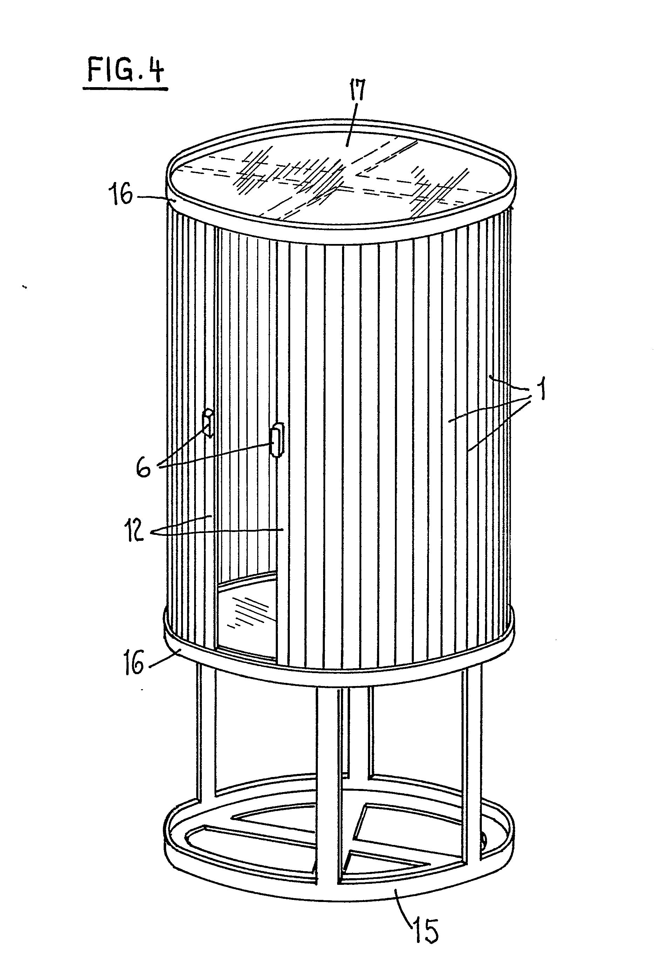

La figure 4 montre une autre forme d'exécution d'une serre utilisant la vitrerie selon l'invention et qui est prévue par exemple pour un balcon. La serre est de forme cylindrique à axe vertical et elle est montée sur une base 15. La figure 4 montre que la partie cylindrique peut être formée de deux vitreries composées de lames 1 selon figure 1. Chaque vitrerie se termine par un longeron 12 muni d'une poignée 6 et elle peut coulisser dans des profilés circulaires inférieur et supérieur 16. Pour faciliter le coulissement des vitreries, celles-ci peuvent rouler sur des galets prévus dans le profilé inférieur 16 ou être suspendue à des galets dans le profilé supérieur 16. Un couvercle 17 vient fermer la partie supérieure de la serre. Il est clair que la serre peut comporter qu'une seule vitrerie coulissante, l'autre vitrerie étant fixe dans les profilés 16.

Ce qui précède montre que la vitrerie selon l'invention peut être utilisée avantageusement dans un grand nombre d'application diverses de construction simple.

- 7 -

0196998

Revendications:

1. Vitrerie flexible composée de lames (1) d'un matériau transparent supportées entre des cadres (2,8), caractérisée en ce que les lames transparentes sont rigides et assemblées entre elles par des joints longitudinaux flexibles (4).

2. Vitrerie selon la revendication 1, caractérisée en ce que les joints flexibles (4) sont formés d'un mastic au silicone ou similaire.

3. Vitrerie selon la revendication 1, caractérisée en ce que les lames transparentes (1) sont en verre, verre de sécurité, verre a transparence variable ou en matériau transparent rigide similaire.

4. Vitrerie selon l'une des revendications 1 à 3, caractérisée en ce que les lames transparentes (1) ont une longueur de 80 à 100 cm, une largeur d'au maximum 10 cm et une épaisseur d'environ 3 mm.

5. Vitrerie selon l'une des revendication 1 à 4, caractérisée en ce que les joints flexible (4) ont une largeur d'environ 4 mm et une épaisseur au maximum égale à celle des lames transparentes (1).

6. Utilisation de la vitrerie selon l'une des revendications 1 à 5 pour une serre comprenant des sections (S) formées chacune d'une pluralité de lames transparentes (1), lesdites sections (S) étant assemblées dans le prolongement l'une de l'autre entre des cadres transversaux (2).

7. Utilisation selon la revendication 6, caractérisé en ce que les sections (S) comprennent deux parties

- 8 -    0196998

verticales (7) formées d'un cadre (8) supportant une plaque (9), ces parties verticales étant reliées entre elles par des parties supérieures (10) de forme polygonale bombée montées entre des longerons (11) et formées chacune d'une vitrerie.

8. Utilisation selon la revendication 7, caractérisée en ce que certaines sections (S) comportent une fenêtre formée d'une vitrerie mobile, susceptible de coulisser dans un profil des cadres transversaux (2), la fenêtre comportant un longeron (12) muni d'une poignée (6) s'appuyant à l'état fermé de la fenêtre contre le cadre (8) et à l'état ouvert contre le longeron (11) formant butée, les lames transparentes (1) de la fenêtre se déplaçant au-dessus des lames transparentes d'une vitrerie fixe de ladite section (S) lors du mouvement d'ouverture et de fermeture de la fenêtre.

9. Utilisation selon la revendication 7, caractérisée en ce que certaines sections (S) comportent deux fenêtres formées chacune d'une vitrerie susceptible de coulisser d'avant en arrière, respectivement d'arrière en avant dans un profil des cadres transversaux (2), chaque fenêtre comportant un longeron (12) muni d'une poignée (6) s'appuyant à l'état fermé de la fenêtre contre un des cadres (8) et à l'état ouvert contre un des longerons (11) formant butée, les lames transparentes d'une des fenêtres coulissant au-dessus, respectivement au-dessous des lames transparentes de l'autre fenêtre lors du mouvement d'ouverture et de fermeture des fenêtres.

10. Utilisation selon l'une des revendications 6, 8 ou 9, caractérisée en ce que les cadres transversaux (2) se composent d'un profil (2a,2b,2c) sur lequel est fixée une latte de fermeture (13), les lames transparentes (1) des vitreries respectives étant supportées et tenues en place sur deux niveaux avec un jeu latéral et un jeu vertical dans ledit profil afin de permettre le coulissement de la ou des fenêtres.

11. Utilisation de la vitrerie selon l'une des revendications 1 à 5 pour une serre de forme circulaire verticale comprenant au moins une section formée d'une pluralité de lames transparentes (1) coulissant dans des profilés inférieur et supérieur (16).

FIG.1

FIG.2

FIG.3

0196998

FIG.4

0196998

Office européen
des brevets

RAPPORT DE RECHERCHE EUROPEENNE

0196998
Numéro de la demande

EP    86 81 0089

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 901 371 (WALMÜ-BADEÖFEN CHR. WALBUM GMBH) * Figures 1-3,6-10,23-25; page 32, ligne 3 - page 34, ligne 17; revendications 1,4-8,14-16 * | 1-5 | A 01 G    9/16<br>A 01 G    13/04<br>E 06 B    3/48 |
| Y |  | 6 | |
| Y | BE-A- 766 245 (MARTINELLI) * Revendications 1,3,5-7; figures 1-4; page 2, ligne 23 - page 3, ligne 29 * | 6-10 | |
| X | DE-A-1 509 904 (SCHWEINSTEIGER) * Revendication 1; page 1; figure 1 * | 1,3 | |
| X,P | FR-A-2 554 545 (VATIN) * Page 2, lignes 1-30; revendications 1,3,7; figures 1-3 * | 1-3 | DOMAINES TECHNIQUES RECHERCHES (Int. Cl.4) |
| A | FR-A-1 327 668 (RUHLMANN) * Page 1, colonne de droite, ligne 26 - page 2, colonne de gauche, ligne 2; figures 1-4; résumé * | 1-6 | A 01 G<br>E 05 D<br>E 06 B<br>A 47 F |

-/-

Le présent rapport de recherche a été établi pour toutes les revendications

| Lieu de la recherche | Date d'achèvement de la recherche | Examinateur |
|---|---|---|
| LA HAYE | 25-06-1986 | MEINDERS H. |

**0196998**
Numéro de la demande

# RAPPORT DE RECHERCHE EUROPEENNE

Office européen
des brevets

EP 86 81 0089

| DOCUMENTS CONSIDERES COMME PERTINENTS | | | Page 2 |
|---|---|---|---|
| Catégorie | Citation du document avec indication, en cas de besoin, des parties pertinentes | Revendication concernée | CLASSEMENT DE LA DEMANDE (Int. Cl.4) |
| A | GB-A-1 551 771 (ESSEX ENTERPRISES) <br> * Revendications 1,4,8,11; figures 1-4 * | 1,6-10 | |
| A | FR-A- 808 224 (MERCIER) <br> * Page 1, ligne 50 - page 2, ligne 25; figures 1-4; résumé * | 1,6-10 | |
| A | GB-A- 454 871 (RODWAY) <br> * Figures 1,2; revendication 1 * | 11 | |
| A | GB-A-1 573 202 (RYNHART & BLOXHAM) <br> * Figure 1; revendication 1 * | 11 | |
| | ----- | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 25-06-1986 | MEINDERS H. |